# EUROPEAN PATENT SPECIFICATION

(11) **EP 2 772 626 B1**
(45) Date of publication and mention of the grant of the patent: **05.05.2021**
(21) Application number: 14156698.4
(22) Date of filing: 26.02.2014
(51) Int. Cl.: F02D 11/10, B29C 45/00, G01D 11/24, B29L 31/34

(54) **Sensor component for electronic throttle valve and electronic throttle valve having same**
Sensorbaugruppe für elektronisches Drosselventil und elektronisches Drosselventil damit
Composant de capteur pour papillon des gaz électronique et papillon électronique ayant celui-ci

(30) Priority: 27.02.2013 CN 201320090016 U
(43) Date of publication of application: 03.09.2014
(73) Proprietor: Vitesco Technologies GmbH, 30165 Hannover (DE)
(72) Inventor: Yang, Ji, Jiu Jiang Zone Wuhu 241009 (CN); Cheng, Dong, Jiu Jiang Zone 241009 (CN); Zhu, Wei, Jinghu Zone Wuhu 241004 (CN)

(56) References cited:
- EP-A1- 0 575 971
- EP-A1- 2 557 399
- EP-A2- 1 321 648
- EP-A2- 1 739 295
- JP-A- H07 318 306
- US-A1- 2008 245 143
- US-A1- 2011 260 719
- US-B1- 6 518 753

## Description

### Technical field

The present device relates to the field of petrol engines, in particular to a sensor component for an electronic throttle valve and an electronic throttle valve having the same.

### Background art

At present, the structure adopted for almost all electronic throttle valve bodies in the Chinese automobile market is a mechanical drive system together with a plastic sensor outer cover. For the most part, the design and manufacture of plastic sensor outer covers employs the concept and process of secondary injection molding, in which a circuit, sensor and plastic outer cover are joined by injection molding.

The secondary injection molding process places high demands on the mold used for injection molding and on the injection molding process. Internal stresses readily arise at the junctions between metal and plastic, leading to cracking, with a significant impact on product quality.

The following inadequacies are evident in the prior art described above:
1. Two processes, namely preliminary injection molding and secondary injection molding, are needed, so the injection molding process is complex.
2. The joining of plastic components to metal components by injection molding places high demands on the mold and on the injection molding process.

Some prior-art examples, as defined by the preamble of independent claim 1, can be found in the following patent documents: EP 1 739 295 A2, US 6 518 753 B1, EP 1 321 648 A2, EP 0 575 971 A1 or JP 07 318 306.

The object of the present device is to provide a sensor component for an electronic throttle valve with a simple injection molding process, the sensor component being defined in claims 1-11, and an electronic throttle valve having the same, as defined in claim 12.

To achieve the above object, according to the invention, a sensor component for an electronic throttle valve is provided, comprising a carrying means, and a circuit portion and a sensor fixed in the carrying means, the carrying means comprising: an individually injection-molded upper cover portion; an individually injection-molded lower cover portion, connected to the upper cover portion and forming an installation space between itself and the upper cover portion; the circuit portion and the sensor both being fixed in the installation space, and the circuit portion being connected to the sensor electrically and a semi-permeable membrane, covering a vent hole in the upper cover portion and being located on the inside of the upper cover portion.

Furthermore, the installation space comprises a sensor holding slot formed on the lower cover portion, the sensor being disposed in the sensor holding slot.

Furthermore, the sensor is hot riveted into the sensor holding slot.

Furthermore, the circuit portion comprises: a first insertion pin portion, a first end of the first insertion pin portion being connected to the lower cover portion, and a second end of the first insertion pin portion being welded to the sensor by electrical resistance welding.

Furthermore, the circuit portion further comprises: an inductive portion disposed in the lower cover portion; and a second insertion pin portion, a first end of the second insertion pin portion being connected to the lower cover portion, and a second end of the second insertion pin portion being welded to the inductive portion by electrical resistance welding.

Furthermore, the installation space comprises an inductive portion holding slot formed by an upper holding slot and a lower holding slot disposed facing each other, the upper holding slot being located on the upper cover portion, the lower holding slot being located on the lower cover portion, and the inductive portion being disposed in the inductive portion holding slot.

Furthermore, the second insertion pin portion comprises a first inductive insertion pin and a second inductive insertion pin, while the first insertion pin portion comprises a first sensor insertion pin, a second sensor insertion pin, a third sensor insertion pin and a fourth sensor insertion pin, wherein the first inductive insertion pin, the second inductive insertion pin, the first sensor insertion pin, the second sensor insertion pin, the third sensor insertion pin and the fourth sensor insertion pin are all connected by hot riveting to the lower cover portion by means of hot riveting points disposed on the lower cover portion, and the first inductive insertion pin, the second inductive insertion pin and the first sensor insertion pin are all located below any one of the second sensor insertion pin, the third sensor insertion pin and the fourth sensor insertion pin.

Furthermore, the first insertion pin portion is interference-fitted to the lower cover portion by means of a first insertion pin hole in the lower cover portion, while the second insertion pin portion is interference-fitted to the lower cover portion by means of a second insertion pin hole in the lower cover portion.

Furthermore, the lower cover portion has: a sealing groove, disposed along an edge of the lower cover portion, a sealing ring being disposed in the sealing groove.

Furthermore, the inductive portion is fixed to the lower cover portion by a spot of glue, while the sensor is fixed to the lower cover portion by a spot of glue.

Furthermore, the sensor is a sensor with a single/level dual output.

According to the invention, an electronic throttle valve is provided, comprising a sensor component and a mechanical drive component connected to the sensor component, the sensor component being the sensor component having at least the features as defined in claim 1.

Using the sensor component for an electronic throttle valve and the electronic throttle valve having the same according to the present device, the sensor component of the electronic throttle valve comprises a carrying means, and a circuit portion and a sensor fixed in the carrying means. The carrying means comprises an upper cover portion, and a lower cover portion connected to the upper cover portion, with an installation space formed between the upper cover portion and the lower cover portion, the circuit portion and the sensor being fixed in the installation space. The upper cover portion and the lower cover portion are both individually injection-molded, and the circuit portion and the sensor are connected together electrically. Once the upper cover portion and lower cover portion have been individually injection-molded, the installation space is formed therebetween; the circuit portion and sensor are then disposed in the installation space, but are not joined with the carrying means by injection molding, so the complex process of preliminary and secondary injection molding can be avoided. The sensor component for an electronic throttle valve and the electronic throttle valve having the same according to the present device solve the technical problem of a complex production process in the prior art, lowering injection molding requirements and making the injection molding process simple.

### Description of the accompanying drawings

The drawings accompanying the description, which form a part of the present application, are intended to furnish a deeper understanding of the present device. Schematic embodiments of the present device and explanations thereof are intended to explain the present device, and by no means constitute improper limitation thereof. In the drawings:
- Fig. 1: shows a schematic diagram of the three-dimensional structure of the sensor component of the electronic throttle valve of the present device;
- Fig. 2: shows an exploded view of Fig. 1;
- Fig. 3: shows an overall schematic diagram of the assembled structure of the lower cover portion of the utility model; and
- Fig. 4: shows a magnified view of part A in Fig. 3.

### Particular embodiments

It must be explained that the embodiments in the present application, as well as the features contained therein, may be combined if no conflict would arise as a result. The present device is illustrated in detail below with reference to the accompanying drawings and embodiments.

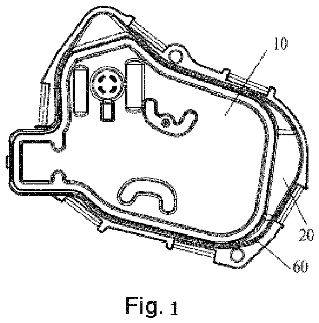

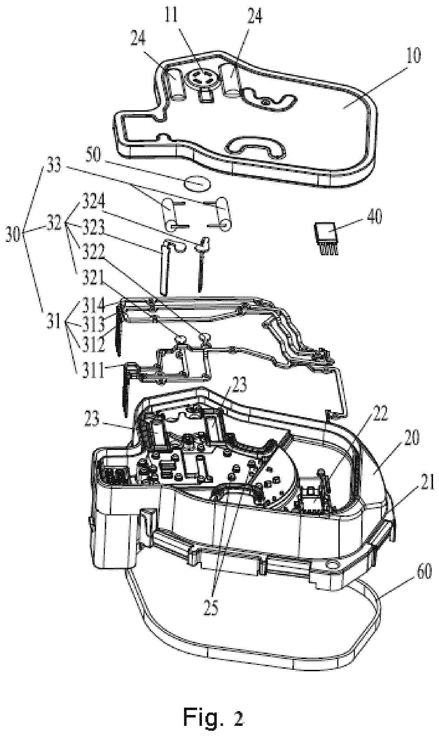

As shown in Figs. 1 and 2, the present device provides a sensor component for an electronic throttle valve. The sensor component for the electronic throttle valve comprises a carrying means, and a circuit portion 30 and a sensor 40 fixed in the carrying means. The carrying means comprises an individually injection-molded upper cover portion 10 and an individually injection-molded lower cover portion 20. The lower cover portion 20 is connected to the upper cover portion 10, with an installation space being formed between the lower cover portion 20 and the upper cover portion 10. The circuit portion 30 and the sensor 40 are both fixed in the installation space, with the circuit portion 30 being connected to the sensor 40 electrically.

In the sensor component for an electronic throttle valve according to the present device, once the upper cover portion 10 and lower cover portion 20 have each been individually injection-molded, an installation space is formed therebetween. The circuit portion 30 and sensor 40 are disposed in the installation space, but are not joined with the carrying means by injection molding, so the complex process of preliminary and secondary injection molding can be avoided. The sensor component for an electronic throttle valve and the electronic throttle valve having the same according to the present device solve the technical problem of a complex production process in the prior art, lowering injection molding requirements and making the injection molding process simple.

The upper cover portion 10 and lower cover portion 20 are each individually injection-molded, with no need to have internal metal conductive components such as the circuit portion 30 and sensor 40 injection-molded together. Molding of plastic alone by means of a single injection molding operation places low demands on the mold and on the injection molding process, while the internal stress produced when plastic and metal conductive components are injection-molded in secondary injection molding can be reduced, avoiding cracking of components in actual use due to internal stress.

The upper cover portion 10 and lower cover portion 20 are welded together ultrasonically, preventing water, dust or oil, etc. from entering the interior and destroying the circuit, and thereby serving to seal and protect the circuit.

As Fig. 2 shows, the installation space between the upper cover portion 10 and lower cover portion 20 comprises a sensor holding slot 22 formed on the lower cover portion 20, the sensor 40 being disposed in the sensor holding slot 22. The sensor holding slot 22 ensures good positioning of the sensor after insertion thereof, with no need for secondary adjustment, so that the sensor will not be affected by the clamp during assembly. Rational tolerances in the dimensions of the sensor holding slot 22 not only ensure that the sensor is successfully positioned upon insertion, but can also achieve the manufacturing precision of the injection molding process, ensuring smooth manufacturing.

Preferably, the sensor 40 is hot riveted into the sensor holding slot 22. After being pre-installed, the sensor is fixed by a hot riveting process, avoiding knocks and vibration during assembly.

As Figs. 2, 3 and 4 show, the circuit portion 30 comprises a first insertion pin portion 31 and a second insertion pin portion 32. The first insertion pin portion 31 comprises first sensor insertion pins 311, a second sensor insertion pin 312, a third sensor insertion pin 313 and a fourth sensor insertion pin 314. The second insertion pin portion 32 comprises a first inductive insertion pin 321, a second inductive insertion pin 322, a third inductive insertion pin 323 and a fourth inductive insertion pin 324.

A first end of the first insertion pin portion 31 is connected to the lower cover portion 20, while a second end of the first insertion pin portion 31 is welded to the sensor 40 by electrical resistance welding, e.g. spot welding.

The circuit portion 30 further comprises an inductive portion 33 disposed in the lower cover portion 20. A first end of the second insertion pin portion 32 is connected to the lower cover portion 20, while a second end of the second insertion pin portion 32 is welded to the inductive portion 33 by electrical resistance welding.

Specifically, the first inductive insertion pin 321, the second inductive insertion pin 322, the first sensor insertion pins 311, the second sensor insertion pin 312, the third sensor insertion pin 313 and the fourth sensor insertion pin 314 are all connected by hot riveting to the lower cover portion 20.

The first inductive insertion pin 321, the second inductive insertion pin 322 and the first sensor insertion pins 311 are located in a lower layer, while the second sensor insertion pin 312, the third sensor insertion pin 313 and the fourth sensor insertion pin 314 are located in an upper layer. The first inductive insertion pin 321, the second inductive insertion pin 322 and first sensor insertion pins 311 are all located below any one of the second sensor insertion pin 312, the third sensor insertion pin 313 and the fourth sensor insertion pin 314.

During assembly, the first inductive insertion pin 321, the second inductive insertion pin 322 and the first sensor insertion pins 311 can be press-fitted onto the lower cover portion 20 first, and then fixed thereto by hot riveting. The second sensor insertion pin 312, the third sensor insertion pin 313 and the fourth sensor insertion pin 314 can then be press-fitted onto the lower cover portion 20 before being fixed thereto by hot riveting.

Protruding hot riveting points 25 are disposed on the lower cover portion 20 for the purpose of fixing the circuit portion 30. The first sensor insertion pins 311, the second sensor insertion pin 312, the third sensor insertion pin 313, the fourth sensor insertion pin 314, the first inductive insertion pin 321 and the second inductive insertion pin 322 are all connected to the lower cover portion 20 by means of hot riveting points 25.

Preferably, the lower cover portion 20 is provided with first insertion pin holes, the first insertion pin portion 31 being interference-fitted to the lower cover portion 20 by means of the first insertion pin holes in the lower cover portion 20.

Preferably, the lower cover portion 20 is also provided with second insertion pin holes, the second insertion pin portion 32 being interference-fitted to the lower cover portion 20 by means of the second insertion pin holes in the lower cover portion 20.

The third inductive insertion pin 323 and the fourth inductive insertion pin 324 each have one end interference-fitted to the lower cover portion 20, and another end welded to the inductive portion 33 by electrical resistance welding.

As Fig. 2 shows, the installation space formed between the upper cover portion 10 and lower cover portion 20 further comprises an inductive portion holding slot in which the inductive portion 33 is disposed. In this embodiment, there are 2 inductive portion holding slots disposed side by side in the lower cover portion 20.

Specifically, each inductive portion holding slot is formed by an upper holding slot 24 and a lower holding slot 23 disposed facing each other, the upper holding slot 24 being located on the upper cover portion 10, and the lower holding slot 23 being located on the lower cover portion 20.

As Fig. 2 shows, a vent hole 11 in the upper cover portion 10 is covered, according to the invention, by a semi-permeable membrane 50 located on the inside of the upper cover portion 10, the vent hole 11 being capable of balancing internal and external pressure. An ultrasonic welding process is used to weld the semi-permeable membrane 50 to the vent hole 11 in the upper cover portion 10, the main function of the semi-permeable membrane 50 being to allow the passage of air while preventing the ingress of water and other foreign matter.

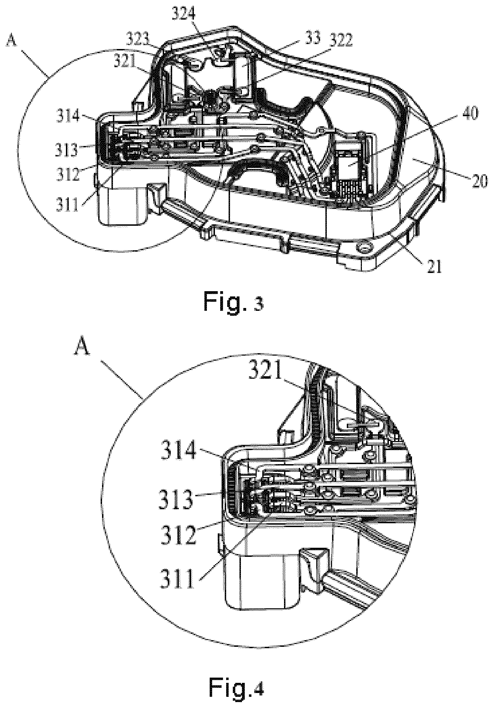

As Fig. 3 shows, the lower cover portion 20 has a sealing groove 21, disposed along an edge of the lower cover portion (20), a sealing ring 60 being disposed in the sealing groove 21. The sealing ring 60 may be a rubber sealing ring, fitted into the sealing groove 21 of the plastic lower cover portion 20 to ensure a tight seal between the lower cover portion 20 and the electronic throttle valve body when they are fitted together.

The inductive portion 33 is fixed to the lower cover portion 20 by a spot of glue, the sensor 40 is fixed to the lower cover portion 20 by a spot of glue, the first end of the first insertion pin portion 31 is fixed to the lower cover portion 20 by a spot of glue, the first end of the second insertion pin portion 32 is fixed to the lower cover portion 20 by a spot of glue, and the sensor 40 is fixed to the second end of the first insertion pin portion 31 by a spot of glue. Fixing by spots of glue can avoid detachment of riveting points on the circuit during vibration, and the resulting damage to the circuit and sensor.

The purpose of fixing by spots of glue in the above embodiment is to enable the mechanically assembled circuit to achieve a higher strength, so that the circuit and sensor will not be destroyed by vibration of the engine during actual use. Spots of dual component glue and UV glue are applied to the circuit and sensor, respectively, for the purpose of immobilizing the circuit, and have a buffering and shock-absorbing effect; moreover, the insulating nature of the glue ensures that the circuit will not be affected thereby. A glue spotting machine and ultraviolet irradiation curing light process may be used, making it easy for the glue spotting process to be automated and used in batch production.

In this embodiment, the sensor 40 may be a sensor with a single/level dual output. Through the integrated use of a sensor with a single/level dual output, the design of the sensor component of the electronic throttle valve is made simpler, and the sensor 40 is also easily positioned. The sensor 40 has a simple assembly process, and is easier to weld by electrical resistance welding. The use of a sensor with a single/level dual output can enable the circuit portion 30 to be connected to the sensor 40 by electrical resistance welding directly, with no further need for a switching circuit. Thus the circuit structure and assembly process are simplified, the number of components is reduced, raw materials are saved, and overall costs are lowered.

In another embodiment of the present device, an electronic throttle valve is provided, comprising a sensor component and a mechanical drive component connected thereto, the sensor component being the sensor component described above.

It can be seen from the above description that the above embodiments of the present device achieve the following technical effects:
1. The upper and lower cover portions and conductive metal elements such as the circuit portion and the sensor are connected together by mechanical assembly, lowering the injection molding requirements for plastic components, and making the process simple.
2. Mechanical assembly facilitates quality monitoring and control during batch production.
3. The use of a sensor with a single/level dual output makes the circuit simple, saves raw materials and lowers costs.

The above embodiments are merely preferred embodiments of the present device, and are by no means intended to limit it. From the point of view of those skilled in the art, a variety of changes and modifications to the present device are possible as defined by the appended claims.

## Claims

1. A sensor component for an electronic throttle valve, comprising a carrying means, and a circuit portion (30) and a sensor (40) fixed in the carrying means, the carrying means comprising:
an individually injection-molded upper cover portion (10) ;
an individually injection-molded lower cover portion (20), connected to the upper cover portion (10) and forming an installation space between itself and the upper cover portion (10);
the circuit portion (30) and the sensor (40) both being fixed in the installation space, and the circuit portion (30) being connected to the sensor (40) electrically, **characterized by** a semi-permeable membrane (50), covering a vent hole (11) in the upper cover portion (10) and being located on the inside of the upper cover portion (10).

2. The sensor component as claimed in claim 1, **characterized in that** the installation space comprises a sensor holding slot (22) formed on the lower cover portion (20), the sensor (40) being disposed in the sensor holding slot (22).

3. The sensor component as claimed in claim 1, **characterized in that** the sensor (40) is hot riveted into the sensor holding slot (22).

4. The sensor component as claimed in claim 1, **characterized in that** the circuit portion (30) comprises:
a first insertion pin portion (31), a first end of the first insertion pin portion (31) being connected to the lower cover portion (20), and a second end of the first insertion pin portion (31) being welded to the sensor (40) by electrical resistance welding.

5. The sensor component as claimed in claim 4, **characterized in that** the circuit portion (30) further comprises:
an inductive portion (33) disposed in the lower cover portion (20);
a second insertion pin portion (32), a first end of the second insertion pin portion (32) being connected to the lower cover portion (20), and a second end of the second insertion pin portion (32) being welded to the inductive portion (33) by electrical resistance welding.

6. The sensor component as claimed in claim 5, **characterized in that** the installation space comprises an inductive portion holding slot formed by an upper holding slot (24) and a lower holding slot (23) disposed facing each other, the upper holding slot (24) being located on the upper cover portion (10), the lower holding slot (23) being located on the lower cover portion (20), and the inductive portion (33) being disposed in the inductive portion holding slot.

7. The sensor component as claimed in claim 5, **characterized in that** the second insertion pin portion (32) comprises a first inductive insertion pin (321) and a second inductive insertion pin (322), while the first insertion pin portion (31) comprises a first sensor insertion pin (311), a second sensor insertion pin (312), a third sensor insertion pin (313) and a fourth sensor insertion pin (314),
wherein the first inductive insertion pin (321), the second inductive insertion pin (322), the first sensor insertion pin (311), the second sensor insertion pin (312), the third sensor insertion pin (313) and the fourth sensor insertion pin (314) are all connected by hot riveting to the lower cover portion (20) by means of hot riveting points (25) disposed on the lower cover portion (20), and the first inductive insertion pin (321), the second inductive insertion pin (322) and the first sensor insertion pin (311) are all located below any one of the second sensor insertion pin (312), the third sensor insertion pin (313) and the fourth sensor insertion pin (314).

8. The sensor component as claimed in claim 5, **characterized in that** the first insertion pin portion (31) is interference-fitted to the lower cover portion (20) by means of a first insertion pin hole in the lower cover portion (20), while the second insertion pin portion (32) is interference-fitted to the lower cover portion (20) by means of a second insertion pin hole in the lower cover portion (20) .

9. The sensor component as claimed in claim 1, **characterized in that** the lower cover portion (20) has:
a sealing groove (21), disposed along an edge of the lower cover portion (20), a sealing ring (60) being disposed in the sealing groove (21).

10. The sensor component as claimed in claim 5, **characterized in that** the inductive portion (33) is fixed to the lower cover portion (20) by a spot of glue, while the sensor (40) is fixed to the lower cover portion (20) by a spot of glue.

11. The sensor component as claimed in claim 1, **characterized in that** the sensor (40) is a sensor with a single/level dual output.

12. An electronic throttle valve, comprising a sensor component and a mechanical drive component connected to the sensor component, **characterized in that** the sensor component is the sensor component as claimed in any one of claims 1 to 11.

## Patentansprüche

1. Sensorbauteil für eine elektronische Drosselklappe, das ein Tragemittel und einen Schaltungsabschnitt (30) und einen Sensor (40), die in dem Tragemittel befestigt sind, aufweist, wobei das Tragemittel aufweist:
einen einzeln spritzgegossenen oberen Abdeckungsabschnitt (10) ;
einen einzeln spritzgegossenen unteren Abdeckungsabschnitt (20), der mit dem oberen Abdeckungsabschnitt (10) verbunden ist und einen Montageraum zwischen sich und dem oberen Abdeckungsabschnitt (10) bildet;
wobei der Schaltungsabschnitt (30) und der Sensor (40) beide in dem Montageraum befestigt sind, und der Schaltungsabschnitt (30) elektrisch mit dem Sensor (40) verbunden ist,
**gekennzeichnet durch** eine halbdurchlässige Membran (50), die eine Entlüftungsöffnung (11) in dem oberen Abdeckungsabschnitt (10) abdeckt und die sich an der Innenseite des oberen Abdeckungsabschnitts (10) befindet.

2. Sensorbauteil nach Anspruch 1, **dadurch gekennzeichnet, dass** der Montageraum einen Sensorhalteschlitz (22) aufweist, der an dem unteren Abdeckungsabschnitt (20) ausgebildet ist, wobei der Sensor (40) in dem Sensorhalteschlitz (22) angeordnet ist.

3. Sensorbauteil nach Anspruch 1, **dadurch gekennzeichnet, dass** der Sensor (40) in den Sensorhalteschlitz (22) warmgenietet ist.

4. Sensorbauteil nach Anspruch 1, **dadurch gekennzeichnet, dass** der Schaltungsabschnitt (30) aufweist:
einen ersten Einsteckstiftabschnitt (31), wobei ein erstes Ende des ersten Einsteckstiftabschnitts (31) mit dem unteren Abdeckungsabschnitt (20) verbunden ist und ein zweites Ende des ersten Einsteckstiftabschnitts (31) durch elektrische Widerstandsschweißung an den Sensor (40) geschweißt ist.

5. Sensorbauteil nach Anspruch 4, **dadurch gekennzeichnet, dass** der Schaltungsabschnitt (30) ferner aufweist:
einen induktiven Abschnitt (33), der in dem unteren Abdeckungsabschnitt (20) angeordnet ist;
einen zweiten Einsteckstiftabschnitt (32), wobei ein erstes Ende des zweiten Einsteckstiftabschnitts (32) mit dem unteren Abdeckungsabschnitt (20) verbunden ist und ein zweites Ende des zweiten Einsteckstiftabschnitts (32) durch elektrische Widerstandsschweißung an den induktiven Abschnitt (33) geschweißt ist.

6. Sensorbauteil nach Anspruch 5, **dadurch gekennzeichnet, dass** der Montageraum einen Halteschlitz für den induktiven Abschnitt aufweist, der durch einen oberen Halteschlitz (24) und einen unteren Halteschlitz (23) gebildet ist, die einander zugewandt angeordnet sind, wobei der obere Halteschlitz (24) an dem oberen Abdeckungsabschnitt (10) angeordnet ist, der untere Halteschlitz (23) an dem unteren Abdeckungsabschnitt (20) angeordnet ist und der induktive Abschnitt (33) in dem Halteschlitz für den induktiven Abschnitt angeordnet ist.

7. Sensorbauteil nach Anspruch 5, **dadurch gekennzeichnet, dass** der zweite Einsteckstiftabschnitt (32) einen ersten induktiven Einsteckstift (321) und einen zweiten induktiven Einsteckstift (322) aufweist, während der erste Einsteckstiftabschnitt (31) einen ersten Sensoreinsteckstift (311), einen zweiten Sensoreinsteckstift (312), einen dritten Sensoreinsteckstift (313) und einen vierten Sensoreinsteckstift (314) aufweist,
wobei der erste induktive Einsteckstift (321), der zweite induktive Einsteckstift (322), der erste Sensoreinsteckstift (311), der zweite Sensoreinsteckstift (312), der dritte Sensoreinsteckstift (313) und der vierte Sensoreinsteckstift (314) alle durch Warmnieten an dem unteren Abdeckungsabschnitt (20) mittels Warmnietpunkten (25) verbunden sind, die an dem unteren Abdeckungsabschnitt (20) angeordnet sind, und der erste induktive Einsteckstift (321), der zweite induktive Einsteckstift (322) und der erste Sensoreinsteckstift (311) alle unterhalb eines beliebigen des zweiten Sensoreinsteckstifts (312), des dritten Sensoreinsteckstifts (313) und des vierten Sensoreinsteckstifts (314) angeordnet sind.

8. Sensorbauteil nach Anspruch 5, **dadurch gekennzeichnet, dass** der erste Einsteckstiftabschnitt (31) an den unteren Abdeckungsabschnitt (20) mittels einer ersten Einsteckstiftöffnung in dem unteren Abdeckungsabschnitt (20) pressgepasst ist, während der zweite Einsteckstiftabschnitt (32) an den unteren Abdeckungsabschnitt (20) mittels einer zweiten Einsteckstiftöffnung in dem unteren Abdeckungsabschnitt (20) pressgepasst ist.

9. Sensorbauteil nach Anspruch 1, **dadurch gekennzeichnet, dass** der untere Abdeckungsabschnitt (20) aufweist:
eine Dichtungsnut (21), die entlang eines Rands des unteren Abdeckungsabschnitts (20) angeordnet ist, wobei ein Dichtungsring (60) in der Dichtungsnut (21) angeordnet ist.

10. Sensorbauteil nach Anspruch 5, **dadurch gekennzeichnet, dass** der induktive Abschnitt (33) an dem unteren Abdeckungsabschnitt (20) durch einen Klebepunkt befestigt ist, während der Sensor (40) an dem unteren Abdeckungsabschnitt (20) durch einen Klebepunkt befestigt ist.

11. Sensorbauteil nach Anspruch 1, **dadurch gekennzeichnet, dass** der Sensor (40) ein Sensor mit einem einstufigen dualen Ausgang ist.

12. Elektronische Drosselklappe, die ein Sensorbauteil und ein mechanisches Antriebsbauteil aufweist, das mit dem Sensorbauteil verbunden ist, **dadurch gekennzeichnet, dass** das Sensorbauteil das Sensorbauteil nach einem der Ansprüche 1 bis 11 ist.

## Revendications

1. Composant capteur pour un papillon des gaz électronique, comprenant un moyen porteur, et une partie circuit (30) et un capteur (40) fixés dans le moyen porteur, le moyen porteur comprenant :
une partie couvercle supérieure (10) individuellement moulée par injection ;
une partie couvercle inférieure (20) individuellement moulée par injection, reliée à la partie couvercle supérieure (10) et ménageant un espace d'installation entre elle-même et la partie couvercle supérieure (10) ;
la partie circuit (30) et le capteur (40) étant tous deux fixés dans l'espace d'installation, et la partie circuit (30) étant reliée électriquement au capteur (40),
**caractérisé par** une membrane semi-perméable (50), recouvrant un trou de mise à l'air (11) dans la partie couvercle supérieure (10) et située sur l'intérieur de la partie couvercle supérieure (10).

2. Composant capteur selon la revendication 1, **caractérisé en ce que** l'espace d'installation comprend une fente (22) de maintien de capteur ménagée sur la partie couvercle inférieure (20), le capteur (40) étant placé dans la fente (22) de maintien de capteur.

3. Composant capteur selon la revendication 1, **caractérisé en ce que** le capteur (40) est riveté à chaud dans la fente (22) de maintien de capteur.

4. Composant capteur selon la revendication 1, **caractérisé en ce que** la partie circuit (30) comprend :
une première partie à broches d'insertion (31), une première extrémité de la première partie à broches d'insertion (31) étant reliée à la partie couvercle inférieure (20) et une deuxième extrémité de la première partie à broches d'insertion (31) étant soudée au capteur (40) par soudage électrique par résistance.

5. Composant capteur selon la revendication 4, **caractérisé en ce que** la partie circuit (30) comprend en outre :
une partie inductive (33) placée dans la partie couvercle inférieure (20) ;
une deuxième partie à broches d'insertion (32), une première extrémité de la deuxième partie à broches d'insertion (32) étant reliée à la partie couvercle inférieure (20) et une deuxième extrémité de la deuxième partie à broches d'insertion (32) étant soudée à la partie inductive (33) par soudage électrique par résistance.

6. Composant capteur selon la revendication 5, **caractérisé en ce que** l'espace d'installation comprend une fente de maintien de partie inductive formée d'une fente de maintien supérieure (24) et d'une fente de maintien inférieure (23) placées en regard l'une de l'autre, la fente de maintien supérieure (24) étant située sur la partie couvercle supérieure (10), la fente de maintien inférieure (23) étant située sur la partie couvercle inférieure (20) et la partie inductive (33) étant placée dans la fente de maintien de partie inductive.

7. Composant capteur selon la revendication 5, **caractérisé en ce que** la deuxième partie à broches d'insertion (32) comprend une première broche d'insertion inductive (321) et une deuxième broche d'insertion inductive (322) tandis que la première partie à broches d'insertion (31) comprend une première broche d'insertion de capteur (311), une deuxième broche d'insertion de capteur (312), une troisième broche d'insertion de capteur (313) et une quatrième broche d'insertion de capteur (314),
la première broche d'insertion inductive (321), la deuxième broche d'insertion inductive (322), la première broche d'insertion de capteur (311), la deuxième broche d'insertion de capteur (312), la troisième broche d'insertion de capteur (313) et la quatrième broche d'insertion de capteur (314) étant toutes reliées par rivetage à chaud à la partie couvercle inférieure (20) au moyen de points de rivetage à chaud (25) placés sur la partie couvercle inférieure (20), et la première broche d'insertion inductive (321), la deuxième broche d'insertion inductive (322) et la première broche d'insertion de capteur (311) sont toutes situées sous l'une quelconque des deuxième broche d'insertion de capteur (312), troisième broche d'insertion de capteur (313) et quatrième broche d'insertion de capteur (314).

8. Composant capteur selon la revendication 5, **caractérisé en ce que** la première partie à broches d'insertion (31) est montée à ajustement serré sur la partie couvercle inférieure (20) au moyen d'un premier trou à broches d'insertion dans la partie couvercle inférieure (20), tandis que la deuxième partie à broches d'insertion (32) est montée à ajustement serré sur la partie couvercle inférieure (20) au moyen d'un deuxième trou à broches d'insertion dans la partie couvercle inférieure (20).

9. Composant capteur selon la revendication 1, **caractérisé en ce que** la partie couvercle inférieure (20) présente :
une rainure d'étanchéité (21), placée le long d'un bord de la partie couvercle inférieure (20), un anneau d'étanchéité (60) étant placé dans la rainure d'étanchéité (21).

10. Composant capteur selon la revendication 5, **caractérisé en ce que** la partie inductive (33) est fixée à la partie couvercle inférieure (20) par un point de colle, tandis que le capteur (40) est fixé à la partie couvercle inférieure (20) par un point de colle.

11. Composant capteur selon la revendication 1, **caractérisé en ce que** le capteur (40) est un capteur à sortie simple/double à niveau.

12. Papillon des gaz électronique, comprenant un composant capteur et un composant mécanique d'entraînement relié au composant capteur, **caractérisé en ce que** le composant capteur est le composant capteur selon l'une quelconque des revendications 1 à 11.
